Europäisches Patentamt

European Patent Office

Office européen des brevets

(19)

(11) Veröffentlichungsnummer : **0 359 759 B1**

(12) ## EUROPÄISCHE PATENTSCHRIFT

(45) Veröffentlichungstag der Patentschrift :
08.04.92 Patentblatt 92/15

(51) Int. Cl.⁵ : **F16K 17/04,** F16K 47/00,
F16F 3/00

(21) Anmeldenummer : 88903811.3

(22) Anmeldetag : 22.04.88

(86) Internationale Anmeldenummer :
PCT/EP88/00343

(87) Internationale Veröffentlichungsnummer :
WO 88/08936 17.11.88 Gazette 88/25

(54) **DÄMPFUNGSEINRICHTUNG FÜR LINEARE BEWEGUNGEN.**

(30) Priorität : 09.05.87 DE 3715562

(43) Veröffentlichungstag der Anmeldung :
28.03.90 Patentblatt 90/13

(45) Bekanntmachung des Hinweises auf die
Patenterteilung :
08.04.92 Patentblatt 92/15

(84) Benannte Vertragsstaaten :
AT BE CH DE FR GB LI

(56) Entgegenhaltungen :
EP-A- 0 032 346
FR-A- 2 389 047

(73) Patentinhaber : SEMPELL
AKTIENGESELLSCHAFT
Werner-von-Siemens-Strasse
W-4052 Korschenbroich (DE)

(72) Erfinder : WEYAND, Manfred
Bismarckstr. 30
W-4060 Viersen (DE)

(74) Vertreter : Ostertag, Reinhard et al
Patentanwälte Dr. Ulrich Ostertag Dr.
Reinhard Ostertag Eibenweg 10
W-7000 Stuttgart 70 (DE)

## Beschreibung

Die Erfindung betrifft eine Dämpfungseinrichtung für lineare Bewegungen zur Verwendung an einem Sicherheitsventil gemäß dem Oberbegrill des Anspruches 1.

Eine derartige Dämpfungseinrichtung ist in der FR-A-2 389 047 beschrieben.

Bei ihr haben zwei becherförmige Dämpferteile, die zusammen einen mit viskosem Medium gefüllten Wirkspalt begrenzen, fest vorgegebene axiale Lage.

Würde man eine derartige Dämpfungseinrichtung an einem Sicherheitsventil verwenden, so wäre die Dämpfung nicht zufriedenstellend, da die Dämpfung einerseits schon bei sehr kleinen Öffnungswegen des Verschlußteiles zuverlässig einsetzen, ungeachtet von Fertigungstoleranzen, die sich z.B. aus der Bearbeitung der Dichtflächen ergeben. Auch ändert sich bei derartigen Sicherheitsventilen die auf die Ventilspindel einwirkende Kraft sehr stark in Abhängigkeit vom Öffnungsweg, und die bekannte Dämpfungseinrichtung kann somit Schwingungen, die in unmittelbarer Nachbarschaft der Schließstellung entstehen, nicht gleichermaßen gut dämpfen wie andere Schwingungen, die sich um eine teilweise Offenstellung herum aufbauen.

Durch die vorliegende Erfindung soll daher eine Dämpfungseinrichtung für lineare Bewegungen gemäß dem Oberbegrill des Anspruches 1 so weitergebildet werden, daß die Dämpfungscharakteristik auf einfache Weise präzise eingestellt werden kann.

Diese Aufgabe ist erfindungsgemäß gelöst durch eine Dämpgungseinrichtung gemäß Anspruch 1.

Vorteilhafte Weiterbildungen der Er+indung sind in Unteransprüchen angegeben.

Bei einer Dämpfungseinrichtung gemäß Anspruch 2 läßt sich der Wert der wegunabhängigen komponente der Dämpfung auf sehr einfache Weise einstellen. Man kann damit die Dämpfungseigenschaften des Sicherheitsventiles leicht unter Berücksichtigung der Längen der einlaßseitig und auslaßseitig an das Sicherheitsventil angeschlossenen Leitungsabschnitte noch am Einsatzort einstellen.

Bei einer Dämpfungseinrichtung gemäß Anspruch 3 läßt sich eine kleine wegabhängige komponente der Dämpfung einstellen, wobei diese komponente je nach Steigung der Abstütz-Gewindeverbindung progressiv oder degressiv sein kann.

Die Weiterbildung der Erfindung gemäß Anspruch 5 ist im Hinblich- auf möglichst geringen abrasiven Charakter des viskosen Mediums von Vorteil.

Nachstehend wird die Erfindung anhand von Ausführungsbeispielen unter Bezugnahme auf die Zeichnung näher erläutert. In dieser zeigen:

Figur 1: einen axialen Schnitt durch eine mit viskosem Medium arbeitende Dämpfungseinrichtung für eine Ventilspindel; und

Figur 2: eine ähnliche Schnittansicht wie Figur 1, in welcher eine abgewandelte Dämpfungseinrichtung wiedergegeben ist.

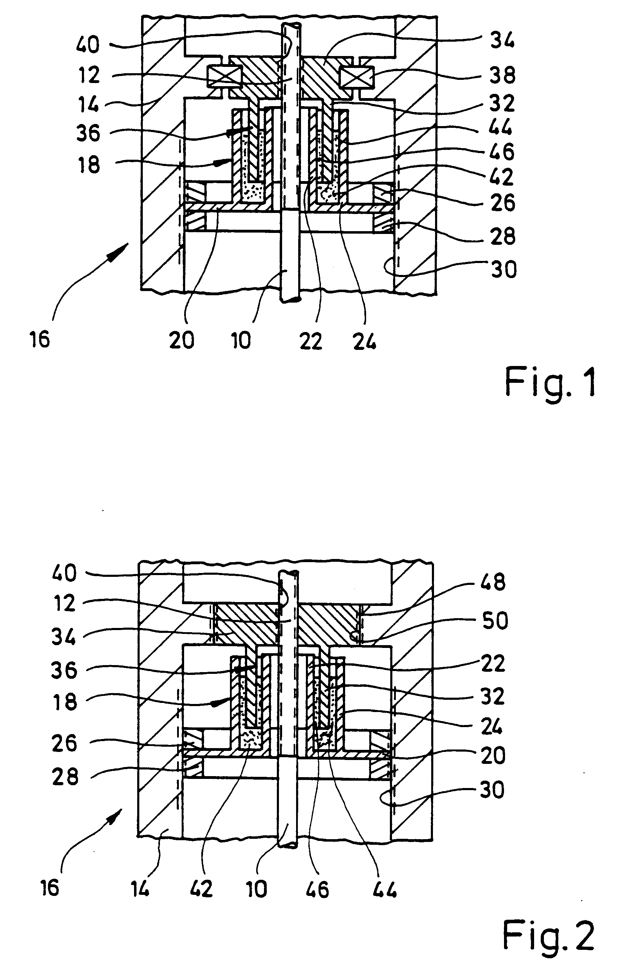

Figur 1 zeigt das obere Ende einer Ventilspindel 10, welches mit einem Gewindeabschnitt 12 versehen ist. Die Ventilspindel ist über nicht-näher gezeigte Gleitdichtpackungen an einem Ventilgehäuse geführt und trägt an ihrem in der Zeichnung nicht wiedergegebenen unteren Ende ein Verschlußstück, welches mit einem ebenfalls nicht wiedergegebenen Ventilsitz zusammenarbeitet.

Vom Ventilgehäuse ist nur ein oberer Gehäuseendabschnitt 14 wiedergegeben, welcher eine auf die Ventilspindel 10 arbeitende, insgesamt mit 16 bezeichnete Dämpfungseinrichtung aufnimmt.

Zur Dämpfungseinrichtung 16 gehört ein unteres Dämpferteil 18, welches einen transversalen Boden 20 und zwei zur Achse der Ventilspindel 10 koaxiale Wirkwände 22, 24 aufweist.

Der Boden 20 ist zwischen zwei Gewinderinge 26, 28 eingespannt, deren Außengewinde in einem Innengewinde 30 des Gehäuseendabschnittes 14 laufen.

Zwischen die Wirkwände 22, 24 greift eine weitere Wirkwand 32 kammartig ein, die von einem Nabenabschnitt 34 getragen ist. Die Bauteile 32 und 34 bilden zusammen ein oberes Dämpferteil 36.

Das Dämpferteil 36 ist über ein Axial/Radiallager 38 am Gehäuseendabschnitt 14 gelagert.

Der Nabenabschnitt 34 ist mit einem Innengewinde 40 versehen, welches mit dem Gewindeabschnitt 12 der Ventilspindel 10 zusammenarbeitet.

In den durch die Wirkwände 22, 24 begrenzten Ringraum ist ein hochviskoses Silikonfett 42 eingefüllt. Letzteres enthält als Füllstoffkömponente oder ausschließlichen.Füllstoff Graphit. Der Pegel des Silikonfettes 42 reicht über die Unterkante der herabhängenden Wirkwand 32 des oberen Dämpferteiles 36.

Die Innenfläche der Wirkwand 24 und die Außenfläche der Wirkwand 32 sowie die Innenfläche der Wirkwand 32 und die Außenfläche der Wirkwand 22 bilden zwei Paare von Wirkflächen, zwischen denen sich ringförmige Wirkspalte 44, 46 befinden. In diesen Wirkspalten liegt eine dünne Schicht des Silikonfettes 42. Die Dicke der Wirkspalte ist in der Zeichnung übertrieben groß wiedergegeben; in der Praxis beträgt die Spaltdicke etwa 0,1 bis etwa 1 mm.

Wird die Ventilspindel 10 linear bewegt, z.B. durch auf das Verschlußstück einwirkende Druckstöße in der

EP 0 359 759 B1

abzusichernden Leitung, so wird die Linearbewegung der Ventilspindel 10 durch ein Bewegungs-Umformgetriebe, welches durch die zusammenarbeitenden Gewinde 12 und 40 sowie das Axial/Radiallager 38 gebildet ist, in eine reine Drehbewegung umgesetzt. Diese Drehbewegung führt zu einer Scherung des in den Wirkspalten 44, 46 befindlichen Silikonfettes 42, und durch die innere Reibung dieses hochviskosen Mediums wird die Bewegung der Ventilspindel 10 gedämpft.

Man erkennt, daß man unabhängig vom zurückgelegten Weg der Ventilspindel 10 exakt die gleiche Wirkspalt-Geometrie hat, so daß die Bewegungsdämpfung wegunabhängig erfolgt.

Das in Figur 2 gezeigte Ausführungsbeispiel entspricht weitgehend demjenigen nach Figur 1, so daß die entsprechenden Bauteile wieder mit denselben Bezugszeichen versehen sind und nachstehend nicht noch einmal genauer erläutert werden.

Das obere Dämpferteil 36 ist nunmehr nicht über ein Axial/Radiallager sondern über ein Außengewinde 48 des Nabenabschnittes 34 und ein gehäusefestes Gegengewinde 50 äm Gehäuseendabschnitt 14 gelagert. Die Gewinde 48 und 50 haben verglichen mit dem Gewindeabschnitt 12 der Ventilspindel 10 geringe Steigung, so daß man für eine gegebene axiale Bewegung der Ventilspindel 10 nur eine kleine axiale Verstellung des oberen Dämpferteiles 36 erhält, damit auch eine kleine Änderung der Eintauchtiefe der Wirkwand 32 in das Silikonfett 42. Dabei kann diese Änderung der Eintauchtiefe positiv oder negativ sein, je nachdem ob das Gewindepaae 48, 50 gleichen Drehsinn aufweist wie das Gewindepaar 12, 40 oder entgegengesetzten Drehsinn. Das Ausmaß des wegabhängigen Anteiles der Dämpfung läßt sich über die Steigung der Gewinde 48, 50 einstellen.

Bei beiden oben beschriebenen Dämpfungseinrichtungen läßt sich die Intensität der Grunddämpfung durch Verstellen des unteren Dämpferteiles 18 vorgeben, wozu die Gewinderinge 26, 28 entsprechend auf dem Innengewinde 30 des Gehäuseendabschnittes 14 verscheaubt werden.

Beide oben beschriebene Dämpfungseinrichtungen arbeiten vollständig ohne Haftreibung. Man hat somit auch für kleine Schwingungsamplituden eine wirksame Dämpfung, wobei die Dämpfung geschwindigkeitsabhängig erfolgt.

## Patentansprüche

1. Dämpfungseinrichtung für lineare Bewegungen zur Verwendung an einem Sicherheitsventil, mit einem Gehäuse (14), mit einem mit der zu dämpfenden Last verbindbaren Eingangsteil (10), mit einem raumfesten äußeren becherförmigen Dämpferteil (10) und einem in dieses von oben eingreifenden drehbaren inneren becherförmigen Dämpferteil (36), dessen Außenfläche zusammen mit der Innenfläche des ersten Dämpferteiles einen Wirkspalt begrenzt, in welchen sich ein viskoses Medium (42) befindet, und mit einem Bewegungsumformgetriebe (12, 38, 40) zum Umsetzen der linearen Bewegung des Eingangsteiles (10) in eine Drehbewegung des drehbaren inneren Dämpferteiles (36), dadurch gekennzeichnet, daß die axiale Relativstellung zwischen dem raumfesten äußeren Dämpferteil (10) und dem drehbaren inneren Dämpferteil (36) einstellbar (26, 28 bzw. 48, 50) ist.

2. Dämpfungseinrichtung nach Anspruch 1, dadurch gekennzeichnet, daß das raumfeste Dämpferteil (18) über eine Gewindeverbindung (26 bis 30) am Gehäuse (14) abgestützt ist.

3. Dämpfungseinrichtung nach Anspruch 1 oder 2, dadurch gekennzeichnet, daß das drehbare Dämpferteil (36) über eine Gewindeverbindung (48, 50) mit kleiner Steigung am Gehäuse (14) abgestützt ist.

4. Dämfungsreinrichtung nach einem der Ansprüche 1 bis 3, dadurch gekennzeichnet, daß das Bewegungsumformgetriebe ein auf dem axial beweglichen, in Winkelrichtung festgelegten Eingangsteil (10) ausgebildetes Gewinde (12) und ein hierauf laufendes, mit dem drehbaen Dämpferteil (18) verbundenes Gewinde (40) aufweist oder eine in der Spindel ausgebildete wendelförmige Nockennut und eine hiermit zusammenarbeitende, mit dem drehbaren Dämpferteil verbundene Nocke aufweist.

5. Dämpfungseinrichtung nach einem der Ansprüche 1 bis 4, dadurch gekennzeichnet, daß das viskose Medium ein Füllmaterial enthaltendes Silikonfett ist, wobei das Füllmaterial zumindest teilweise, vorzugsweise vollständig, aus Graphit besteht.

6. Dämpfungseinrichtung nach einem der Ansprüche 1 bis 5, dadurch gekennzeichnet, daß das viskose Medium seine Viskosität in einem großen Temperaturbereich, vorzugsweise über den Bereich von -50° C bis 200° C, im wesentlichen nicht ändert.

7. Dämpfungseinrichtung nach einem der Ansprüche 1 bis 6, dadurch gekennzeichnet, daß die zwischen den Dämpferteilen (18, 36) wirkenden Wirkspalte, in welchen sich das viskose Medium (42) befindet, eine Dicke von weniger als etwa 1 mm, vorzugsweise eine Dicke von etwa 0,1 mm haben.

**Claims**

1. Damping device for linear movements for use on a safety valve, with a housing (14), with an input part (10) able to be connected to the load to be damped, with a space-fixed outer, cup-shaped damping part (18) and a rotary, inner, cup-shaped damping part (36) engaging in the latter from above, the outer surface of which damping part (36) together with the inner surface of the first damping part defines a working gap, in which a viscous medium (42) is located and with movement-conversion gearing (12, 38, 40) for converting the linear movement of the input part (10) into a rotary movement of the rotary, inner damping part (36), characterised in that the axial relative position between the space-fixed, outer damping part (18) and the rotary, inner damping part (36) is adjustable (26, 28 or 48, 50).

2. Damping device according to Claim 1, characterised in that the space-fixed damping part (18) is supported on the housing (14) by way of a threaded connection (26 to 30).

3. Damping device according to Claim 1 or 2, characterised in that the rotary damping part (36) is supported on the housing (14) by way of a threaded connection (48, 50) having a small pitch.

4. Damping device according to one of Claims 1 to 3, characterised in that the movement-conversion gearing comprises a thread (12) constructed on the input part (10) which is axially movable and fixed in the angular direction and a thread (40) travelling thereon and connected to the rotary damping part (18) or a helical cam groove constructed in the spindle and a cam cooperating therewith and connected to the rotary damping part.

5. Damping device according to one of Claims 1 to 4, characterised in that the viscous medium is a silicone grease containing a filler, the filler consisting at least partly, preferably completely, of graphite.

6. Damping device according to one of Claims 1 to 5, characterised in that the viscosity of the viscous medium does not change substantially over a large temperature range, preferably over the range from -50° C to 200° C.

7. Damping device according to one of Claims 1 to 6, characterised in that the working gaps acting between the damping parts (18, 36), in which the viscous medium (42) is located, have a thickness of less than approximately 1 mm, preferably a thickness of approximately 0.1 mm.

**Revendications**

1. Agencement d'amortissement de mouvements linéaires à utiliser pour une soupape de sûreté, avec un corps (14), avec une pièce d'entrée (10) pouvant être connectée à la charge à amortir, avec une pièce d'amortissement extérieure (18) en forme de coupe et fixe dans l'espace et une pièce d'amortissement intérieure (36) en forme de coupe pouvant tourner et agissant sur celle-ci par le dessus, dont la surface extérieure délimite avec la surface intérieure de la première pièce d'amortissement un intervalle fonctionnel dans lequel se trouve un fluide visqueux (42) et avec une transmission de modification de déplacement (12, 38, 40) destinée à transformer le déplacement linéaire de la pièce d'entrée (10) en un mouvement de rotation de la pièce d'amortissemnt intérieure rotative (36), caractérisé en en ce que la position relative axiale entre la pièce d'amortissement extérieure fixe dans l'espace (18) et la pièce d'amortissement intérieure rotative (36) peut être réglé (26, 28 et 48, 50).

2. Agencement d'amortissement selon la revendication 1, caractérisé en ce que la pièce d'amortissement (18) fixe dans l'espace est supportée sur le corps (14) au moyen d'un assemblage à filetage (26 à 30).

3. Agencement d'amortissement selon la revendication 1 ou 2, caractérisé en ce que la pièce d'amortissement rotative (36) est supportée sur le corps (14) par un assemblage à filetage (48, 50) à pas réduit.

4. Agencement d'amortissement selon l'une des revendications 1 à 3, caractérisé en ce que la transmission de modification de mouvement comporte un filet (12) réalisé sur la pièce d'entrée (10) mobile dans le sens axial et fixé en direction angulaire, et un filetage (40) assemblé à la pièce d'amortissement rotative (18) et se déplaçant sur celui-ci, ou bien une rainure de came de forme hélicoïdale pratiquée dans la tige et une came coopérant avec celle-ci et assemblée à la pièce d'amortissement rotative.

5. Agencement d'amortissement selon l'une des revendications 1 à 4, caractérisé en ce que le fluide visqueux est une graisse de silicone contenant une matière de charge tandis que la matière de charge est constituée, au moins partiellement et de préférence complètement, de graphite.

6. Agencement d'amortissement selon l'une des revendications 1 à 5, caractérisé en ce que le fluide visqueux ne subit pas essentiellement de variations de sa viscosité dans une large plage de température, et de préférence dans la plage de -50°C à 200°C.

7. Agencement d'amortissement selon l'une des revendications 1 à 6, caractérisé en ce que les intervalles focntionnels agissant entre les pièces d'amortissement (18, 36) et dans lesquels se trouve le fluide visqueux (42) ont une épaisseur de moins de 1 mm environ et de préférence une épaisseur d'environ 0,1 mm.

Fig. 1

Fig.2